# FASCICULE DE BREVET EUROPEEN

(11) **EP 3 126 648 B1**
(45) Date de publication et mention de la délivrance du brevet: **19.09.2018**
(21) Numéro de dépôt: 15725494.7
(22) Date de dépôt: 03.04.2015
(51) Int. Cl.: F02B 29/04

(54) **ECHANGEUR DE CHALEUR COMPRENANT UN FAISEAU D'ECHANGE MUNI DE MOYENS PERMETTANT D'AMELIORER LA FIXATION DUDIT FAISCEAU D'ECHANGE AUX PAROIS D'UN BOITIER**
WÄRMETAUSCHER MIT EINER AUSTAUSCHBÜNDEL MIT EINER VORRICHTUNG ZUR VERBESSERUNG DER BEFESTIGUNG DIESES AUSTAUSCHBÜNDELS AN DIE WÄNDE EINES GEHÄUSES
HEAT EXCHANGER COMPRISING AN EXCHANGE BUNDLE EQUIPPED WITH MEANS FOR IMPROVING ATTACHMENT OF SAID EXCHANGE BUNDLE TO THE WALLS OF A HOUSING

(30) Priorité: 03.04.2014 FR 1452976
(43) Date de publication de la demande: 08.02.2017
(73) Titulaire: Valeo Systèmes Thermiques, 78320 Le Mesnil-Saint-Denis (FR)
(72) Inventeur: FERLAY, Benjamin, 78720 CERNAY LA VILLE (FR)
(74) Mandataire: Neuviale, Bertrand
(86) Numéro de dépôt international: PCT/EP2015/000723
(87) Numéro de publication internationale: WO 2015/149950

(56) Documents cités:
- EP-A2- 1 795 847
- DE-A1- 4 313 505
- FR-A1- 2 984 476
- FR-A1- 2 989 772

## Description

### Domaine de l'invention

La présente invention concerne un échangeur de chaleur, par exemple un échangeur de chaleur destiné à un véhicule automobile. Plus précisément, l'invention concerne un échangeur de chaleur permettant l'échange entre un premier fluide et un deuxième fluide, dans lequel le premier fluide est, par exemple, un fluide tel que de l'air et le deuxième fluide est, par exemple, un fluide liquide tel que de l'eau. L'échangeur de chaleur, selon la présente invention, est particulièrement adapté afin d'être utilisé pour le refroidissement de l'air de suralimentation.

L'invention concerne plus particulièrement un échangeur de chaleur conforme au préambule de la revendication 1, tel que divulgué dans le document EP 1 795 847 A2.

### Etat de la technique

De nos jours, les moteurs à combustion des véhicules automobiles sont fréquemment alimentés en air comprimé afin d'améliorer les performances desdits moteurs. Cet air comprimé est souvent désigné à l'aide du terme « air de suralimentation ». L'air comprimé est obtenu en utilisant un compresseur entraîné par les gaz d'échappement. Par conséquent, la compression de l'air a pour effet d'échauffer l'air comprimé. Il s'avère nécessaire de refroidir l'air comprimé avant son introduction à l'intérieur du moteur, afin d'abaisser la température dudit air comprimé avant son introduction dans un cylindre du moteur.
Pour refroidir l'air comprimé, il est connu d'utiliser un échangeur de chaleur comprenant un faisceau d'échange de chaleur constitué d'un assemblage de plaques, positionnées les unes sur les autres et formant, en combinaison, un conduit permettant de guider un premier fluide tel qu'un liquide, d'une entrée vers une sortie. Afin d'améliorer l'échange de chaleur, l'assemblage des plaques est complété grâce à des éléments intercalaires ondulés.

Le faisceau d'échange de chaleur est positionné à l'intérieur d'un carter ou boîtier. Ce boîtier est pourvu d'une entrée et d'une sortie pour le deuxième fluide à refroidir, tel que l'air, et est adapté pour guider le deuxième fluide d'une entrée vers une sortie. Le boîtier a la fonction d'une boîte collectrice enveloppant ledit faisceau de chaleur et permettant l'admission et la régulation de l'air de suralimentation. Un tel boîtier est par exemple moulé dans une matière telle que l'aluminium ou le plastique.

En pratique, les parois du boîtier sont relativement fines et relativement souples. Ainsi, lors de l'utilisation du boîtier, le volume dudit boîtier peut augmenter en fonction de l'augmentation de la pression et de la température à l'intérieur du boîtier.

Le boîtier d'un échangeur de chaleur, selon l'art antérieur, est pourvu d'une ouverture permettant d'introduire le faisceau d'échange de chaleur à l'intérieur du boîtier. En pratique, le boîtier se présente essentiellement sous la forme d'une boîte comprenant cinq parois. La sixième paroi est supprimée afin de permettre au faisceau d'échange de chaleur d'être introduit à l'intérieur du boîtier en déplaçant ledit faisceau d'échange vers l'intérieur du boîtier selon une direction d'introduction. Lorsque le faisceau d'échange de chaleur est en place, la sixième paroi du boîtier est formée par un capot auquel est fixée une première extrémité du faisceau d'échange.

Pour ce type d'application, le capot permet de connecter l'assemblage des plaques avec des éléments intercalaires ondulés de l'échangeur de chaleur et de fixer l'ensemble contre ledit capot. Le capot est pourvu de conduits permettant au fluide tel qu'un liquide, d'entrer à l'intérieur de l'échangeur de chaleur et de sortir de l'échangeur de chaleur. Le capot fixé au faisceau d'échange de chaleur réalise une fonction de fermeture de l'ouverture permettant l'introduction de l'échangeur de chaleur. Ainsi, dans un premier temps, le faisceau d'échange de chaleur est enveloppé ou entouré des parois du boîtier et, dans un deuxième temps, entouré du capot.

Dans sa position d'utilisation, le capot, auquel le faisceau d'échange de chaleur est fixé, se trouve, en règle générale, positionné de façon essentiellement horizontale, au-dessus dudit faisceau d'échange de chaleur. En d'autres termes, le faisceau d'échange de chaleur est suspendu au capot.

Les échangeurs de chaleur connus de l'art antérieur présentent plusieurs inconvénients. Dans un premier temps, la connexion entre le boîtier et le capot est fragile et doit résister à pression élevée et aux températures élevées présentes à l'intérieur de l'échangeur de chaleur. De plus, les parois du boîtier peuvent, lors de l'utilisation normale de l'échangeur de chaleur, se déformer sous la pression de l'air chaud présent à l'intérieur dudit échangeur de chaleur. Cette déformation, constante lors de l'utilisation de l'échangeur de chaleur, peut provoquer une usure prématurée du matériau utilisé lors de la fabrication du boîtier. Ainsi, la fiabilité du boîtier peut être altérée.

De plus, dans la mesure où le faisceau d'échange de chaleur est suspendu au capot, le faisceau d'échange de chaleur peut présenter des mouvements pendulaires sous l'influence des vibrations imposées par le fonctionnement du moteur du véhicule avec lequel l'échangeur de chaleur est utilisé. La répétition de ces mouvements pendulaires, tout particulièrement en présence d'un effet de résonance, peut avoir une influence néfaste sur la fiabilité de l'échangeur de chaleur.

### Objet de l'invention

L'échangeur de chaleur selon la présente invention vise à remédier aux inconvénients des échangeurs de chaleurs, tels que divulgués dans l'état de la technique, en proposant une nouvelle conception quant à la fixation d'un faisceau d'échange de chaleur à l'intérieur du boîtier d'un échangeur de chaleur.

A cet effet, la présente invention concerne un échangeur de chaleur conforme à la revendication 1.

Grâce à la présence du rebord en projection ou protubérance, la deuxième extrémité du faisceau d'échange de chaleur ne peut pas se déplacer par rapport aux parois du boîtier, limitant ainsi le mouvement pendulaire de l'échangeur de chaleur. Le rebord en projection peut être fixé à l'extrémité inférieure du faisceau d'échange. Le rebord en projection peut également être fixé sur la paroi inférieure du boîtier. Le rebord en projection est maintenu ou fixé en position à l'intérieur d'une gorge. Lorsque le rebord en projection est fixé sur la paroi inférieure du boîtier, la gorge est localisée à l'extrémité inférieure du faisceau d'échange. Lorsque le rebord en projection est fixé à l'extrémité inférieure du faisceau d'échange, la gorge est localisée sur la paroi inférieure du boîtier. Le rebord en projection est maintenu à l'intérieur de ladite gorge à l'aide d'un moyen de fixation tel qu'une colle. En d'autres termes, la sécurisation de la connexion entre le boîtier et le capot est améliorée par l'absence de mouvement pendulaire du faisceau d'échange de chaleur par rapport au boîtier sous l'influence des vibrations imposées par le fonctionnement du moteur du véhicule avec lequel l'échangeur de chaleur est utilisé.
Selon un mode de réalisation particulier de l'invention, le faisceau d'échange de chaleur pendant l'assemblage de l'échangeur de chaleur est introduit à l'intérieur du boîtier selon une direction d'introduction, telle que le rebord en projection et la gorge s'étendent dans une direction essentiellement perpendiculaire à ladite direction d'introduction.

Selon un mode de réalisation particulier de l'invention, la colle est une colle de type mono-composant.

Selon un mode de réalisation particulier de l'invention, la colle est une colle de type bi-composant.

Selon un mode de réalisation particulier de l'invention, ledit au moins un rebord est un moyen d'ancrage et, en projection, présente un profil essentiellement en forme de « L ».

Le rebord en projection fixé à l'aide d'une colle et dont le profil est essentiellement en forme de « L » offre une extrémité recourbée, formant ainsi la plus petite longueur du « L ». L'extrémité recourbée améliore la fixation du rebord en projection avec la colle au sein de la gorge. La forme en « L » du rebord en projection améliore la fixation par rapport à la fixation d'un rebord en projection en forme de « I ».

Selon un mode de réalisation particulier de l'invention, la gorge se présente sous la forme d'un profil et est formée à la deuxième extrémité inférieure du faisceau d'échange de chaleur au moyen d'un procédé de brasage.

### Brève descriptions des dessins

Les buts, objet et caractéristiques de la présente invention ainsi que ses avantages apparaîtront plus clairement à la lecture de la description qui suit, des modes de réalisation préférés d'un échangeur de chaleur selon l'invention, faite en référence aux dessins dans lesquels :
- La figure 1 montre une vue, en coupe, d'un échangeur de chaleur au sein d'un boîtier selon un premier mode de réalisation de la présente invention, à titre d'exemple ;
- la figure 2 représente, en détail, la fixation du faisceau d'échange de chaleur aux parois du boîtier de l'échangeur de chaleur selon la figure 2, à titre d'exemple ;
- la figure 3 montre un échangeur de chaleur au sein d'un boîtier selon un deuxième mode de réalisation de la présente invention, à titre d'exemple ;
- la figure 4 représente une vue, en coupe, d'un échangeur de chaleur au sein d'un boîtier selon un troisième mode de réalisation de la présente invention, à titre d'exemple ; et
- la figure 5 montre, en détail, la fixation d'un faisceau d'échange de chaleur aux parois du boîtier d'un échangeur de chaleur selon un quatrième mode de réalisation de la présente invention à titre d'exemple.

### Description détaillée des modes de réalisation

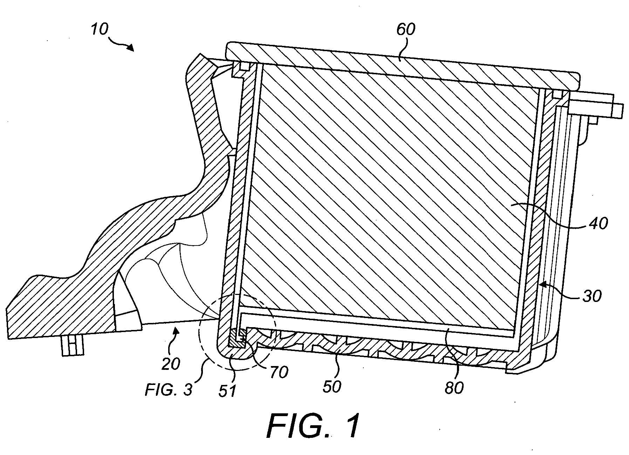

La figure 1 montre une vue en coupe d'un échangeur de chaleur 10.

L'échangeur de chaleur 10 tel que montré sur la figure 1 est particulièrement adapté pour une utilisation dans l'industrie automobile afin de refroidir l'air de suralimentation d'un moteur thermique. L'échangeur de chaleur 10 permet de refroidir l'air de suralimentation par échange thermique avec un premier fluide, comme l'air extérieur, ou un liquide comme, par exemple, l'eau de refroidissement d'un moteur, formant ainsi un échangeur de type air/air ou liquide/air.

Dans un premier temps, l'échangeur de chaleur 10 comprend un collecteur d'admission 20, souvent désigné par l'homme du métier sous la dénomination anglaise « intake manifold ». Le collecteur d'admission 20 est fixé à la culasse de la chambre de combustion du moteur (non montrée), c'est-à-dire à l'entrée du cylindre. En fonction du régime du moteur, l'air peut être refroidi, totalement, partiellement ou l'air peut ne pas être refroidi. Le collecteur d'admission 20 est connecté à un boîtier 30. Le boîtier 30 forme une enveloppe pour entourer un faisceau d'échange de chaleur 40 se trouvant à l'intérieur dudit boîtier 30. Le boîtier 30 est pourvu d'une entrée et d'une sortie pour un premier fluide gazeux et est adapté pour guider ledit premier fluide d'une entrée vers une sortie.

Le faisceau d'échange de chaleur 40, selon la présente invention, est positionné à l'intérieur du boîtier 30.

Le faisceau d'échange de chaleur 40 est constitué, par exemple, d'un assemblage de plaques, positionnées les unes sur les autres, formant en combinaison un conduit permettant de guider un deuxième fluide liquide, utilisé pour refroidir le premier fluide gazeux, d'une entrée vers une sortie. Afin d'améliorer l'échange de chaleur, l'assemblage des plaques est complété grâce à des éléments intercalaires ondulés.

Selon un fonctionnement connu, un premier fluide, tel que l'air, traverse du faisceau d'échange de chaleur 40 et un deuxième fluide, tel que l'eau du circuit de refroidissement, circule à l'intérieur du faisceau d'échange de chaleur 40 et permet ainsi à l'air d'être refroidi.

Le faisceau d'échange de chaleur 40 est formé d'un assemblage de plaques embouties, encore appelées « demi-lames ». Cependant, l'invention s'applique également à d'autres types de faisceaux, et notamment à des faisceaux comportant des tubes et des ailettes. Le faisceau d'échange de chaleur 40, tel que montré sur la figure 1, est, par exemple, formé d'un empilement de plaques embouties disposées par paires et, réalisées à l'identique.

Comme montré sur la figure 1, la partie supérieure du faisceau d'échange de chaleur 40 est fixée sur un élément de fermeture tel qu'une plaque ou un capot 60. Le capot 60 réalise plusieurs fonctions. Une des fonctions consiste à permettre une entrée et une sortie du liquide de refroidissement au moyen de tubulures disposées sur le capot 60. Par ailleurs, le capot 60 forme l'élément de fermeture du boîtier 30. Ainsi, lorsque l'échangeur de chaleur 10 est assemblé, le faisceau d'échange de chaleur 40 est enveloppé, d'une part, par les parois formées par le boîtier 30, et, d'autre part, par le capot 60.

L'échangeur de chaleur 10 tel que montré sur la figure 1 présente les caractéristiques selon lesquelles le faisceau d'échange 40 est suspendu au capot 60. Cela signifie que lors de son utilisation normale dans l'art antérieur, sous l'influence des vibrations imposées par le fonctionnement du véhicule automobile avec lequel l'échangeur de chaleur 10 est connecté, le faisceau d'échange de chaleur 40 peut présenter des mouvements pendulaires et peut se déplacer par rapport à l'intérieur du boîtier 30. Selon l'art antérieur, ce mouvement pendulaire fragilise la fixation entre le capot 60 et le boîtier 30.

Par ailleurs, dans l'art antérieur, la paroi inférieure du boîtier 30 n'étant pas fixée aux parties inférieures du faisceau d'échange, les parois du boîtier 30, et particulièrement les parois inférieurs peuvent se déformer sous la pression de l'air chaud présent à l'intérieur de l'échangeur de chaleur. Cette déformation constante lors de l'utilisation de l'échangeur de chaleur peut provoquer une usure prématurée du matériau utilisé pour la fabrication du boîtier 30.

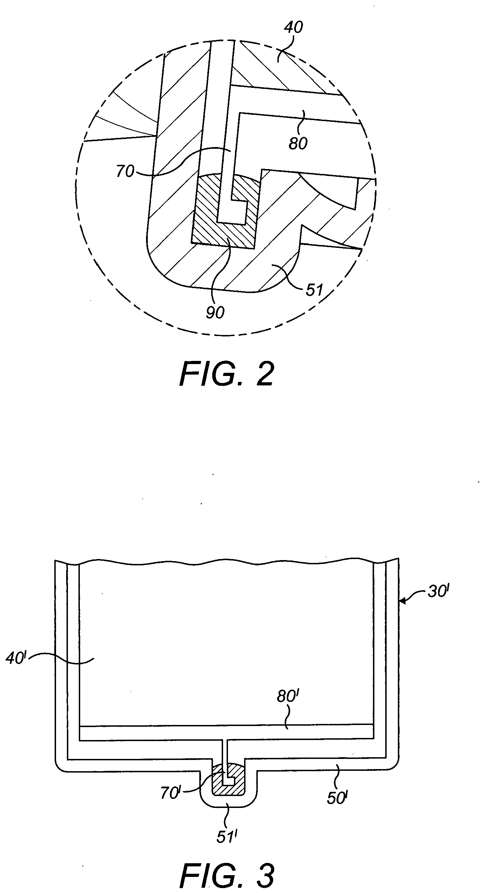

Contrairement à un échangeur de chaleur de l'art antérieur, la paroi inférieure 50 du boîtier 30 est pourvue d'une gorge ou d'un canal 51 comme montré sur la figure 1. La partie intérieure de la gorge 51 forme un volume déterminé. La plaque 80 formant la partie inférieure du faisceau d'échange de chaleur 40 comprend un rebord en projection ou une protubérance 70. Le volume déterminé de la gorge 51 est adapté pour recevoir la protubérance 70. La fixation de la protubérance 70, à l'intérieur de la gorge 51, est montrée plus en détail sur la figure 2.

La figure 2 montre la partie inférieure du faisceau d'échange de chaleur 40 formée par la plaque 80. La plaque 80 est pourvue, en son extrémité, d'un moyen d'ancrage réalisé ici sous la forme d'une protubérance 70 en forme d'un « L ». La protubérance « L » est reçue à l'intérieur du volume formé par la gorge 51. D'autres modes de réalisation non représentés proposent un moyen d'ancrage réslisé sous la forme d'un "T » ou d'un F.

L'intérieur de la gorge 51 est au moins partiellement rempli d'un moyen de fixation 90, tel qu'une colle. Lorsque le moyen de fixation 90 est solidifié, la protubérance 70 est maintenue ou fixée à l'intérieur de la gorge 51. Ainsi, la partie inférieure du faisceau d'échange 40 est fixée à la paroi 50 du boîtier 30. Cette fixation permet d'éviter les mouvements pendulaires qui pourraient intervenir sous l'influence des vibrations imposées par le fonctionnement du moteur du véhicule automobile avec lequel l'échangeur de chaleur 10 est utilisé. Par ailleurs, la paroi 50 ne peut pas se déformer et se déplacer par rapport au capot 60 sous la pression de l'air chaud présent à l'intérieur de l'échangeur de chaleur 10.

Dans l'art antérieur, lors de l'assemblage d'un échangeur de chaleur, le boîtier est, en règle générale, installé dans une position verticale, c'est-à-dire l'ouverture dirigée vers le haut. Ensuite, l'ensemble formé du capot et du faisceau d'échange est introduit, de façon verticale, à l'intérieur du boîtier, jusqu'à ce que le capot entre en contact avec ledit boîtier.

Contrairement à l'art antérieur, considérant le mode de réalisation de la présente invention, tel que montré sur les figures 1 et 2, le procédé permettant d'assembler un échangeur de chaleur 10 comprend une étape préalable à l'introduction de l'ensemble formé par le capot 60 et le faisceau d'échange 40 afin de remplir la gorge 51 du moyen de fixation sous forme de colle, par exemple. La colle peut être de type mono-composant. La colle durcit alors sous l'influence de l'air et de l'humidité présents à l'intérieur de l'échangeur de chaleur 10 après son assemblage.

De façon alternative, il est possible d'utiliser une colle de type bi-composant, c'est-à-dire que le processus de durcissement de la colle est initié par la présence d'un premier et d'un deuxième composant formant ensemble ladite colle 90.

Afin de faciliter l'assemblage, le moyen de fixation 90 présente, lors de son introduction dans la gorge 51, une viscosité relativement importante. Cela signifie que le moyen de fixation 90 présente un aspect plutôt pâteux et non liquide. La consistance du moyen de fixation 90 est donc suffisamment souple pour recevoir la protubérance 70 et suffisamment visqueuse pour éviter le déplacement de la protubérance 70, notamment lors du mouvement du boîtier 30 sur un tapis roulant lors de l'assemblage de l'échangeur de chaleur 10, par exemple.

Comme indiqué sur la figure 2, les dimensions de la zone à l'intérieur de la gorge 51 sont relativement importantes par rapport aux dimensions de la protubérance 70. Ainsi, cette différence de dimensions facilite l'introduction du faisceau d'échange de chaleur 40, à l'intérieur du boîtier 30 pendant son assemblage. De plus, cette différence de dimensions permet d'assembler les composants dudit échangeur de chaleur 10 avec une relative tolérance quant aux dimensions desdits composants, sans pour autant compromettre l'assemblage dudit échangeur de chaleur 10.

Les échangeurs de chaleur montrés sur les figures 1, 2 et 3 sont relativement peu onéreux à produire. La plaque 80 formant l'extrémité inférieure du faisceau d'échange 40 est, en règle générale, obtenue à l'aide d'un procédé d'extrusion. La modification du procédé d'extrusion pour d'obtenir une plaque 80 comportant au moins une protubérance 70 en son extrémité ne génère pas de coût additionnel. La paroi du boîtier 30 est, en règle générale, réalisée à l'aide d'un matériau en plastique. Ainsi, la formation additionnelle de la gorge 51 n'ajoute qu'un faible coût de production lors de la production d'un tel boîtier 30. En d'autres termes, la solution telle que décrite sur les figures 1, 2 et 3 ne nécessite pas de pièces indépendantes additionnelles lors de la production d'un échangeur de chaleur 10. Le moyen de fixation 90 qui peut être utilisé pour la fixation est également relativement peu onéreux.

La figure 3 décrit un deuxième mode de réalisation de l'échangeur de chaleur selon la présente invention. Selon la figure 3, la paroi 50' du boîtier 30' est pourvue d'une gorge ou canal 51' se trouvant positionné de façon centrale et adapté pour recevoir une protubérance 70'. La protubérance 70' est fixée à la plaque 90' formant la partie inférieure du faisceau d'échange 40'. La fixation de la protubérance 70' à l'intérieur de la gorge 51' est identique à la fixation de la protubérance 70 à l'intérieur de la gorge 51 tel que montré sur les figures 1 et 2.

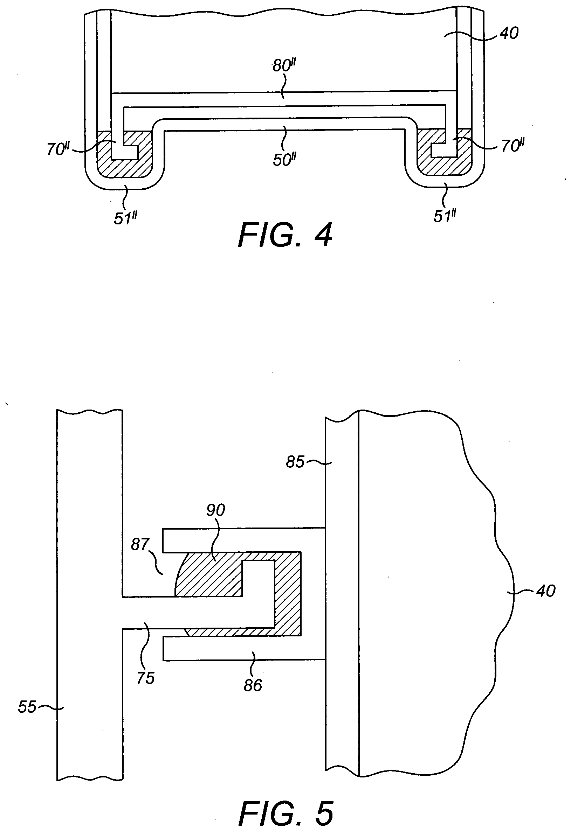

La figure 4 montre un troisième mode de réalisation de l'échangeur de chaleur selon la présente invention selon lequel la plaque 80", formant la partie inférieure du faisceau d'échange 40, est pourvue de deux protubérances 70" se trouvant aux deux extrémités de la plaque 90". La paroi inférieure 50" est pourvue de deux gorges ou canaux 51" pour recevoir respectivement la première et la deuxième protubérances 70".

La figure 5 représente un quatrième mode de réalisation de l'échangeur de chaleur selon la présente invention. Selon la figure 5, la plaque inférieure d'un faisceau d'échange 40 est pourvue, en son côté inférieur, d'une plaque 85. La plaque 85 est elle-même pourvue d'un élément 86 formant un canal avec une ouverture 87 dirigée vers le bas afin de recevoir une protubérance 75 en son sein, ladite protubérance étant fixée à l'intérieur d'une paroi inférieure 55 d'un boîtier 30. La fixation de la protubérance 75 à l'intérieur du canal 86 est comparable à la fixation des protubérances 70, 70' et 70". Un moyen de fixation 90, présentant une viscosité relativement importante, est présent à l'intérieur du canal 86. Lorsque ledit moyen de fixation 90 est introduit à l'intérieur du canal 86, celui-ci adhère aux parois du canal 86 malgré l'ouverture 87 du canal 86 dirigée vers le bas. Cela signifie que l'assemblage de l'échangeur de chaleur selon le quatrième mode de réalisation de l'invention peut se présenter de la même façon que celui des modes de réalisation 1, 2 et 3 selon la présente invention. La combinaison d'un échangeur de chaleur 40 et d'un capot 60 peut être réalisée de façon verticale afin de permettre l'introduction de la protubérance 75 à l'intérieur du canal 66 et ainsi être fixée à l'aide du moyen de fixation 90 à l'intérieur du canal 86.

## Revendications

1. Echangeur de chaleur (10) comprenant un boîtier (30) adapté pour envelopper un faisceau d'échange de chaleur (40), ledit bottier (30) étant pourvu d'une ouverture permettant de recevoir ledit faisceau d'échange de chaleur (40) à l'intérieur dudit boîtier (30), ledit faisceau d'échange de chaleur (40) comprenant une première extrémité adaptée pour obturer l'ouverture du boîtier (30) lorsque le faisceau d'échange de chaleur (40) est inséré à l'intérieur dudit bottier (30), le faisceau d'échange de chaleur (40) étant fixé à un capot et étant suspendu audit capot lorsque le capot est positionné au-dessus dudit faisceau d'échange de chaleur (40) dans sa position d'utilisation, un premier élément étant prévu sur la deuxième extrémité (80, 80', 80", 85) du faisceau d'échange de chaleur (40) opposée à ladite première extrémité ou sur la paroi inférieure (50, 50', 50", 55) du boîtier (30) et étant pourvu d'au moins un rebord en projection (70, 70', 70", 75), un deuxième élément étant prévu sur ladite deuxième extrémité du faisceau d'échange de chaleur (40) ou sur ladite paroi inférieure (50, 50', 50", 55) du boîtier (30) et étant pourvu d'une gorge (51, 51', 51", 86) adaptée pour recevoir et fixer ledit au moins un rebord en projection (70, 70', 70", 75) ledit échangeur étant **caractérisé en ce que** ledit au moins un rebord en projection (70, 70', 70", 75) et ladite au moins une gorge (51, 51', 51", 86) sont adaptés pour fixer l'au moins un rebord en projection (70, 70', 70", 75) dans l'au moins une gorge (51, 51', 51", 86) à l'aide d'une colle,

2. Echangeur de chaleur (10) selon la revendication 1, dans lequel le faisceau d'échange de chaleur (40) pendant l'assemblage de l'échangeur de chaleur (10) est introduit à l'intérieur du boîtier (30) selon une direction d'introduction, le rebord en projection (70, 70', 70", 75) et la gorge (51, 51', 51", 86) s'étendant dans une direction essentiellement perpendiculaire à ladite direction d'introduction,

3. Echangeur de chaleur (10) selon l'une des revendications 1 ou 2, dans lequel la colle est une colle de type mono composant.

4. Echangeur de chaleur (10) selon l'une des revendications 1 ou 2, dans lequel le moyen de fixation est une colle de type bi-composant.

5. Echangeur de chaleur (10) selon l'une des revendications précédentes, dans lequel ledit au moins un rebord en projection (70, 70', 70", 75) est un moyen d'ancrage et se présente en coupe essentiellement sous la forme d'un « L »,

6. Echangeur de chaleur (10) selon l'une des revendications précédentes, dans lequel la gorge se présente sous la forme d'un profil (86) et est connectée à la deuxième extrémité (80, 80', 80", 85) du faisceau d'échange de chaleur (40), et dans lequel ledit profil (86) est connecté au faisceau d'échange de chaleur (40) au moyen d'un procédé de brasage,

## Patentansprüche

1. Wärmetauscher (10), welcher ein Gehäuse (30) umfasst, das dafür ausgelegt ist, ein Wärmetauscherbündel (40) zu umhüllen, wobei das Gehäuse (30) mit einer Öffnung versehen ist, die es ermöglicht, das Wärmetauscherbündel (40) im Inneren des Gehäuses (30) aufzunehmen, wobei das Wärmetauscherbündel (40) ein erstes Ende umfasst, das dafür ausgelegt ist, die Öffnung des Gehäuses (30) zu verschließen, wenn das Wärmetauscherbündel (40) ins Innere des Gehäuses (30) eingefügt ist, wobei das Wärmetauscherbündel (40) an einer Haube befestigt ist und an der Haube aufgehängt ist, wenn die Haube in ihrer Betriebsposition über dem Wärmetauscherbündel (40) positioniert ist, wobei ein erstes Element an dem zweiten Ende (80, 80', 80", 85) des Wärmetauscherbündels (40), das dem ersten Ende gegenüberliegt, oder an der unteren Wand (50, 50', 50", 55) des Gehäuses (30) vorgesehen ist und mit wenigstens einem vorstehenden Rand (70, 70', 70", 75) versehen ist, wobei ein zweites Element an dem zweiten Ende des Wärmetauscherbündels (40) oder an der unteren Wand (50, 50', 50", 55) des Gehäuses (30) vorgesehen ist und mit einer Nut (51, 51', 51", 86) versehen ist, die dafür ausgelegt ist, den wenigstens einen vorstehenden Rand (70, 70', 70", 75) aufzunehmen und zu befestigen, wobei der Wärmetauscher **dadurch gekennzeichnet ist, dass** der wenigstens eine vorstehende Rand (70, 70', 70", 75) und die wenigstens eine Nut (51, 51', 51", 86) dafür ausgelegt sind, den wenigstens einen vorstehenden Rand (70, 70', 70", 75) in der wenigstens einen Nut (51, 51', 51", 86) mithilfe eines Klebstoffs zu befestigen.

2. Wärmetauscher (10) nach Anspruch 1, wobei das Wärmetauscherbündel (40) während des Zusammenbaus des Wärmetauschers (10) ins Innere des Gehäuses (30) in einer Einführungsrichtung eingeführt wird, wobei sich der vorstehende Rand (70, 70', 70", 75) und die Nut (51, 51', 51", 86) in einer Richtung erstrecken, die im Wesentlichen senkrecht zu der Einführungsrichtung ist.

3. Wärmetauscher (10) nach einem der Ansprüche 1 oder 2, wobei der Klebstoff ein Einkomponentenklebstoff ist.

4. Wärmetauscher (10) nach einem der Ansprüche 1 oder 2, wobei das Befestigungsmittel ein Zweikomponentenklebstoff ist.

5. Wärmetauscher (10) nach einem der vorhergehenden Ansprüche, wobei der wenigstens eine vorstehende Rand (70, 70', 70", 75) ein Verankerungsmittel ist und im Schnitt im Wesentlichen eine L-Form aufweist.

6. Wärmetauscher (10) nach einem der vorhergehenden Ansprüche, wobei die Nut die Form eines Profils (86) aufweist und mit dem zweiten Ende (80, 80', 80", 85) des Wärmetauscherbündels (40) verbunden ist, und wobei das Profil (86) mit dem Wärmetauscherbündel (40) mittels eines Hartlötverfahrens verbunden ist.

## Claims

1. Heat exchanger (10) comprising a housing (30) designed to enclose a heat exchange core bundle (40), the said housing (30) being provided with an opening able to accept the said heat exchange core bundle (40) inside the said housing (30), the said exchange core bundle (40) comprising a first end designed to close the opening of the housing (30) when the heat exchange core bundle (40) is inserted into the said housing (30), the heat exchange core bundle (40) being fixed to a cap and suspended from the said cap when the cap is positioned over the said heat exchange core bundle (40) in its position of use, a first element being provided on the second end (80, 80', 80", 85) of the heat exchange core bundle (40) which is the opposite end to the said first end or on the bottom wall (50, 50', 50", 55) of the housing (30) and being provided with at least one projecting rim (70, 70', 70", 75), a second element being provided on the said second end of the heat exchange core bundle (40) or on the said bottom wall (50, 50', 50", 55) of the housing (30) and being provided with a groove (51, 51', 51", 86) designed to accept and secure the said at least one projecting rim (70, 70', 70", 75), the said exchanger being **characterized in that** the said at least one projecting rim (70, 70', 70", 75) and the said at least one groove (51, 51', 51", 86) are designed for securing the at least one projecting rim (70, 70', 70", 75) in the at least one groove (51, 51', 51", 86) using an adhesive.

2. The exchanger (10) according to Claim 1, in which the heat exchange core bundle (40) during assembly of the heat exchanger (10) is introduced into the housing (30) in a direction of introduction, the projecting rim (70, 70', 70", 75) and the groove (51, 51', 51", 86) extending in a direction essentially perpendicular to the said direction of introduction.

3. Heat exchanger (10) according to one of Claims 1 and 2, in which the adhesive is an adhesive of single-part type.

4. Heat exchanger (10) according to one of Claims 1 and 2, in which the fixing means is an adhesive of the two-part type.

5. Heat exchanger (10) according to one of the preceding claims, in which the said at least one projecting rim (70, 70', 70", 75) is an anchoring means and in cross section is essentially L-shaped.

6. Heat exchanger (10) according to one of the preceding claims, in which the groove takes the form of a profile section (86) and is connected to the second end (80, 80', 80", 85) of the heat exchange core bundle (40) and in which the said profile section (86) is connected to the heat exchange core bundle (40) by using a brazing process.
